# EUROPÄISCHE PATENTANMELDUNG

(11) **EP 1 970 868 A1**
(43) Veröffentlichungstag der Anmeldung: **17.09.2008**
(21) Anmeldenummer: 08004925.7
(22) Anmeldetag: 17.03.2008
(51) Int. Cl.: G07F 17/12, G06Q 10/00

(54) **Vorrichtung und Verfahren zum automatischen Einlagern von Stückgut**

(30) Priorität: 16.03.2007 DE 102007014239
(71) Anmelder: Nobab GmbH, 70825 Korntal (DE)
(72) Erfinder: Fischer, Claus, 70825 Korntal (DE)
(74) Vertreter: Duhme, Torsten

(57) **Zusammenfassung**

Eine Vorrichtung (10) zum automatisierten Einlagern von Stückgut, insbesondere für eine Paketstation, ist mit einem geschlossenen Lagerraum (20) zum Einlagern des Stückguts ausgebildet. Der Lagerraum (20) ist von einer Umhäusung (22) umschlossen, die mindestens eine Öffnung (24) zum Einbringen von Stückgut in den Lagerraum (20) aufweist. Der Lagerraum (20) besitzt mindestens eine von der Öffnung (24) verschiedene Entnahmeeinrichtung zum Entnehmen von Stückgut aus dem Lagerraum (20), wobei an der Öffnung (24) ferner eine Transporteinrichtung (32) mit einer Transportfläche (50) angeordnet ist, die zum Ablegen eines durch die Öffnung (24) eingebrachten Stückguts ausgebildet ist. Die Vorrichtung (10) besitzt eine Steuereinrichtung (36) zum Verlagern von zumindest einem Teil der Transportfläche (50). Der Teil der Transportfläche (50) ist automatisiert verlagerbar, so dass Stückgut an unterschiedlichen Stellen im Lagerraum (20) abgeladen werden kann. Ferner betrifft die Erfindung ein entsprechendes Verfahren zum automatisierten Einlagern von Stückgut in einen von einer Umhäusung (22) umschlossenen Lagerraum (20).

## Beschreibung

Die vorliegende Erfindung betrifft eine Vorrichtung zum automatisierten Lagern von Stückgut, insbesondere für eine Paketstation, mit einem Lagerraum, der zum Lagern eines Stückguts ausgebildet ist, wobei der Lagerraum von einer Umhäusung umschlossen ist, die mindestens eine Öffnung zum Einbringen des Stückguts in den Lagerraum aufweist, und wobei der Lagerraum mindestens eine von der Öffnung verschiedene Entnahmeeinrichtung zum Entnehmen des Stückguts aus dem Lagerraum aufweist.

Die Erfindung betrifft ferner ein Verfahren zum automatisierten Einlagern von Stückgut in einen von einer Umhäusung umschlossenen Lagerraum, mit den folgenden Schritten:
- Bereitstellen einer Öffnung in der Umhäusung zum Einbringen von Stückgut in den Lagerraum,
- Bereitstellen einer von der Öffnung verschiedenen Entnahmeeinrichtung zum Entnehmen von Stückgut aus dem Lagerraum.

Eine solche Vorrichtung und ein solches Verfahren sind aus US 2001/0034665 A1 bekannt.

Das Aufkommen an Waren, die nicht persönlich im Geschäft erworben werden, sondern zunächst bestellt und dann auf dem Versandweg ausgeliefert werden, hat sich in den vergangenen Jahren deutlich erhöht. Die Zunahme ist unter anderem damit zu erklären, dass die Möglichkeiten, das vorhandene Warenangebot zu sichten und Preise zu vergleichen, mit der stets zunehmenden Verbreitung und steigenden Professionalität des Internets erheblich verbessert worden sind. Insbesondere kleine Gewerbetreibende haben durch das Internet die Möglichkeit erhalten, Kunden in einem sehr großen geographischen Raum zu finden.

Bei der bekannten Nutzung des Versandweges muss sich der Versender an bestimmte Öffnungszeiten des von ihm gewählten Logistikunternehmens halten, um eine Sendung aufgeben zu können. Auch der Empfänger der Sendung ist an die Arbeitsabläufe des Logistikunternehmens gebunden, da dieses eine Auslieferung nur zu einem ganz bestimmten Zeitpunkt vornimmt. Gerade bei Berufstätigen entsteht dabei das Problem, dass der Zeitpunkt der Auslieferung mit dem Berufsalltag unvereinbar ist. Eine Lösung bieten dabei Vorrichtungen zum automatisierten Ein- und Auslagern von Gegenständen, die unter dem Begriff "Paketstation" bekannt geworden sind.

Eine der grundlegenden Möglichkeiten, die eine Paketstation bietet, ist das Hinterlegen einer Sendung in der Paketstation durch ein Logistikunternehmen, so dass der berechtigte Empfänger die Sendung rund um die Uhr und nach Belieben abholen kann. Eine Paketstation kann aber auch einem Versender die Möglichkeiten bieten, eine Sendung in der Paketstation einzulagern, wobei die Sendung dann von einem Lieferfahrzeug des Logistikunternehmens abgeholt und auf den Versandweg gebracht wird. Je nach Bedarf können solche Paketstationen an zentralen Punkten innerhalb einer Stadt, aber auch in Wohngebieten aufgestellt werden.

In diesem Sinne wird in der eingangs genannten US 2001/0034665 A1 eine Paketstation mit einer Mehrzahl von vordefinierten Fächern vorgeschlagen. Möchte ein Logistikunternehmen eine Sendung zur Abholung bereitstellen, so lagert das Logistikunternehmen die Sendung in der Paketstation ein und verschafft dem Empfänger der Sendung eine Zugangsberechtigung, bspw. in Form eines Zahlencodes oder einer Chipkarte. Wenn der Empfänger seine Sendung abholen möchte, so erkennt die Paketstation anhand der Zugangsberechtigung, welche Sendung an den Empfänger ausgegeben werden soll. In der Paketstation wird das Fach mit der gewünschten Sendung so verlagert, dass es vor einer verschlossenen Öffnung in der Paketstation zu ruhen kommt. Anschließend gibt die Paketstation den Teil der verschließbaren Öffnung frei, der zur Entnahme der gewünschten Sendung erforderlich ist. Nach der Entnahme der Sendung wird die Öffnung wieder verschlossen. (Eine vergleichbare Paketstation ist auch aus der WO 2005/111954 A1 bekannt.)

Diese bekannte Paketstation bietet grundsätzlich auch die Möglichkeit, dass ein Versender eine Sendung (Stückgut) einlagert, so dass die Sendung bei der nächsten Möglichkeit vom Logistikunternehmen abgeholt werden kann. Es ist dabei jedoch nachteilig, dass die Größen der einzelnen Fächern fest vorgegeben sind, bspw. sich nur mit erheblichem Arbeitsaufwand umkonfigurieren lassen. So kann bspw. die Situation entstehen, dass alle großen Fächer belegt sind und kein Platz für eine weitere große Sendung verbleibt, obwohl die Summe des freien Raums in den kleinen und mittleren Fächern den für den großen Gegenstand benötigten Stauraum bei weitem überschreitet. Bei der gezeigten Vorrichtung ist es außerdem nachteilig, dass stets ein Fach bereitgestellt werden muss, um ein Paket mit maximal zulässiger Größe aufzunehmen. Da ein solches Paket aber in der Praxis nur sehr selten verschickt wird, verbleibt durch dieses Fach in der Regel ungenutzter Lagerraum.

Ein weiteres Problem der gezeigten Vorrichtung ist, dass die Entnahme des zu versendenden Stückguts durch das Logistikunternehmen mit steigender Anzahl der zu versendenden Gegenstände immer aufwändiger und langwieriger wird. Dadurch entstehen dem Logistikunternehmen unnötige Kosten, und der Versand des Stückguts wird verzögert. Schließlich sei darauf hingewiesen, dass nach einer Entnahme des Stückguts die einzelnen Sendungen gesichtet werden müssen, bspw. um eilige Sendungen von normalen Sendungen zu trennen.

Aus einem anderen technischen Gebiet, nämlich dem Gebiet der Transport- und Verladetechnik, sind Teleskopfördereinrichtungen bekannt. So zeigt bspw. die DE 102 55 843 A1 ein Förderband mit mehreren Rahmenabschnitten, die ineinandergeschoben werden können. Auf diese Weise erhält man die Möglichkeit, auf der Ladefläche eines Lastkraftwagens systematisch gleichartiges Stückgut zu stapeln.

Vor diesem Hintergrund ist es eine Aufgabe der vorliegenden Erfindung, eine kostengünstige Vorrichtung und ein Verfahren zum automatisierten Einlagern von Stückgut aufzuzeigen, ohne dabei an eine fest vorgegebene Fachaufteilung gebunden zu sein. Insbesondere soll die Vorrichtung auf einfache Weise ein Einlagern von Gegenständen mit verschiedenen Größen und/oder mit verschiedenen Formen ermöglichen. Vorzugsweise soll die Einlagerung derart erfolgen, dass eine schnelle und effektive Abholung durch ein Logistikunternehmen möglich wird.

Diese Aufgabe wird nach einem Aspekt der Erfindung mit einer Vorrichtung der eingangs genannten Art gelöst, bei der ferner an der Öffnung eine Transporteinrichtung mit einer Transportfläche angeordnet ist, die zum Ablegen eines durch die Öffnung eingebrachten Stückguts ausgebildet ist, bei der die Vorrichtung eine Steuereinrichtung zur Verlagerung zumindest eines Teils der Transportfläche aufweist und bei der der Teil der Transportfläche derart automatisiert verlagerbar ist, dass Stückgut an unterschiedlichen Stellen im Lagerraum abgeladen werden kann.

Die Aufgabe der Erfindung wird außerdem mit einem Verfahren der eingangs genannten Art gelöst, ferner mit den folgenden Schritten:
- Bereitstellen einer Transporteinrichtung an der Öffnung, wobei die Transporteinrichtung einen Transportfläche aufweist,
- Ablegen des Stückguts durch die Öffnung auf der Transportfläche,
- automatisiertes Verlagern zumindest eines Teils der Transportfläche,
- Bewegen des Stückguts über die Transportfläche, und
- Abladen in den Lagerraum,
wobei das Verlagern mittels einer Steuereinrichtung derart gesteuert wird, dass Stückgut an unterschiedlichen Stellen im Lagerraum abgeladen werden kann.

Ein Vorteil der Erfindung ist darin zu sehen, dass die vorgeschlagene Vorrichtung und das vorgeschlagene Verfahren keine Unterteilung des Lagerraums erfordern und die Einlagerung von völlig unterschiedlichen Stückgütern, z.B. kleine, leichte Sendungen bis hin zu großen, schweren Sendungen, ermöglichen. Zwar ergeben sich - wie später noch ausgeführt wird - vorteilhafte Weiterbildungen der Erfindung, wenn man Einteilungen bzw. Unterteilungen des Lagerraums vornimmt, doch ist die Realisierung der Erfindung auf eine solche Unterteilung nicht angewiesen. Vielmehr ermöglicht es die vorgeschlagene Ausgestaltung der Transporteinrichtung, unterschiedliche Arten von Stückgut an unterschiedlichen Stellen des Lagerraums einzulagern.

Zu Beginn der Einlagerung des Stückguts wird das Stückgut durch die Öffnung in die Vorrichtung eingebracht und auf der Transportfläche abgelegt. Grundsätzlich ist es möglich, dass es sich bei der Öffnung um eine verschließbare Öffnung handelt, die einem Benutzer unmittelbar zugängig ist. In diesem Fall autorisiert sich der Benutzer vorteilshafterweise (bspw. mittels eines PIN-Codes oder einer Chipkarte), dass er zum Einlagern von Stückgut berechtigt ist. Daraufhin wird die Öffnung freigegeben, so dass der Benutzer das Stückgut in die Vorrichtung einbringen kann. Das Stückgut gelangt dann unmittelbar oder bspw. über eine Schleuse auf die Transporteinrichtung.

Wenn die Vorrichtung ein Teil einer Paketstation ist, ist die Öffnung dem Benutzer vorzugsweise nicht zugängig. Vielmehr gibt der Benutzer das Stückgut an dem allgemeinen Bedienterminal der Paketstation auf, und das Stückgut wird innerhalb der Paketstation zu der internen Öffnung an einer Zwischenwand transportiert und auf der Transporteinrichtung bzw. der Transportfläche positioniert.

Wie bereits zuvor erwähnt, weist die Transporteinrichtung eine Transportfläche auf. Die Transportfläche hat einen Abladebereich, der als der Abschnitt der Transportfläche verstanden werden soll, an dem ein Stückgut die Transportfläche verlässt und im Lagerraum zu ruhen kommt. Sofern keine weiteren technischen Maßnahmen getroffen werden, wird ein neues Stückgut die Transportfläche am Abladebereich unter Wirkung der Schwerkraft verlassen, so dass sich der Abladebereich üblicherweise zumindest geringfügig oberhalb der Stelle im Lagerraum befindet, an der das Stückgut abgeladen werden soll.

Durch eine Verlagerung und/oder Veränderung zumindest eines Teils der Transportfläche, wie nachfolgend noch genauer erläutert wird, wird der Abladebereich an einer bestimmten Stelle positioniert. Wird das Stückgut dann auf der Transportfläche der Transporteinrichtung bewegt, so bestimmt die Position des Abladebereichs ungefähr die Lagerstelle, an der das Stückgut eingelagert wird. Auf diese Weise kann das Stückgut bspw. weiter vorne oder weiter hinten im Lagerraum eingelagert werden oder an einer Stelle abgeladen werden, wo der Lagerraum eine geringe Füllhöhe hat. Obwohl es in der Regel nicht zwingend erforderlich ist, ist es vorteilhaft, wenn die Transporteinrichtung an den Seiten überhöhte Bereiche aufweist, die eine Führung des Stückguts auf der Transportfläche verbessern. Außerdem sei darauf hingewiesen, dass die Verlagerung sowohl vor, während oder nach der Positionierung des Stückguts auf der Transporteinrichtung erfolgen kann.

Da die Transportfläche für jedes Stückgut individuell positioniert werden kann und damit jedem Stückgut zumindest annähernd eine bestimmte Position im Lagerraum zugewiesen werden kann, ergibt sich eine einfache Möglichkeit, das Stückgut logistisch vorteilhaft einzulagern und vorzusortieren. Es sei darauf hingewiesen, dass die Transportfläche einen Transportweg zwischen der Öffnung und dem Abladebereich bildet und dass eine Verlagerung und/oder Veränderung der Transportfläche zu einer Änderung dieses Transportwegs führt. Zwar ist es auch denkbar, die gesamte Transporteinrichtung verfahrbar auszugestalten und auf diese Weise ein Stückgut von der Öffnung zu einer bestimmten Stelle im Lagerraum zu transportieren, doch wird die zuvor erläuterte Ausgestaltung im Hinblick auf den Kostenaspekt als sehr vorteilhaft angesehen. Die Transporteinrichtung verbleibt vorzugsweise in der Vorrichtung.

Die Vorrichtung und das Verfahren machen sich den erfindungsgemäß erkannten Vorteil zunutze, dass das Stückgut, welches in die Vorrichtung eingelagert wird und von einem Logistikunternehmen abgeholt wird, zwar üblicherweise von individuellen Versendern eingelagert wird, dass auf die im Lagerraum eingelagerten Sendungen aber nicht individuell und gezielt zugegriffen werden muss. Darin unterscheidet sich das eingelagerte Stückgut von abzuholenden Sendungen, bei denen in der Regel jede Sendung einem anderen Empfänger zugeordnet ist. Insbesondere im Zusammenspiel mit einer Paketstation, die sowohl ein Einlagern als auch ein Auslagern von Gegenständen ermöglichen soll, zeigt die Erfindung eine effiziente und kostengünstige Möglichkeit auf, Stückgut automatisiert einzulagern.

Damit ist die oben genannte Aufgabe vollständig gelöst.

In einer Ausgestaltung der Erfindung weist die Vorrichtung eine Erfassungseinrichtung zum Erfassen mindestens eines Merkmals eines eingebrachten Stückguts auf, und die Steuereinrichtung ist für eine Verlagerung der Transportfläche in Abhängigkeit von dem Merkmal ausgebildet.

Auf diese Weise kann die Effizienz bei der Einlagerung von Stückgut verbessert werden. Diese Ausgestaltung eröffnet eine Vielzahl von Möglichkeiten, das Stückgut optimiert in den Lagerraum einzulagern. Die Optimierung kann dabei im Hinblick auf verschiedene Kriterien vorgenommen werden. Ist es bspw. für den Logistikunternehmer vorteilhaft, schnell zwischen Expresssendungen und normalen Sendungen unterscheiden zu können, so können diese verschiedenen Arten von Sendungen in verschiedenen Bereichen des Lagerraums eingelagert werden.

Es gibt eine Vielzahl von Möglichkeiten, die Erfassungseinrichtung anzuordnen und auszugestalten. Wird die Vorrichtung autark, also ohne eine zugeordnete Paketstation betrieben, so kann die Erfassungseinrichtung an der Öffnung angebracht sein, um ein Merkmal des Stückguts zu erfassen. Wird die Vorrichtung im Zusammenspiel mit einer Paketstation verwendet, so kann die Erfassungseinrichtung auch in der Paketstation angeordnet sein und kann das Merkmal des Stückguts dort erfasst werden. Bei einem Ausführungsbeispiel ist die Erfassungseinrichtung im Zusammenhang mit einem Bedienerterminal derart ausgestaltet, dass durch eine Eingabe am Bedienerterminal das Merkmal des Stückguts spezifiziert wird (bspw., ob es sich um eine Expresssendung oder eine normale Sendung handelt).

Vorteilhafterweise werden mehrere Merkmale erfasst, wobei die Merkmale dann vorzugsweise mittels logischer Verknüpfung ausgewertet werden. So kann bspw. neben der Erfassung, ob es sich um eine Expresssendung oder um eine normale Sendung handelt, auch berücksichtigt werden, welcher Zielort für das Stückgut vorgesehen ist und/oder ob weitere Eigenschaften zu berücksichtigen sind, z.B. zerbrechlicher Inhalt. Ferner werden vorteilhafterweise mehrere Erfassungseinrichtungen oder eine Erfassungseinrichtung mit mehreren Sensoren verwendet, bspw. um ein Stückgut schnell von mehreren Seiten zu erfassen.

In einer weiteren Ausgestaltung der Erfindung ist das Merkmal das Volumen und/oder das Gewicht des Stückguts.

Auf diese Weise kann die Effizienz beim Einlagern von Stückgut weiter verbessert werden. Wie bereits erläutert, ist eine umfangreiche Auswertung der Merkmale eines Stückguts möglich und vorteilhaft. Dabei wird es insbesondere als vorteilhaft angesehen, wenn bei der Einlagerung eines Stückguts dessen Volumen und/oder dessen Gewicht berücksichtigt wird. Um bspw. die Gefahr zu verringern, dass ein schweres Paket ein leichtes Paket zerdrückt, kann die Transporteinrichtung derart angesteuert werden, dass schwereres Stückgut in einem anderen Bereich des Lagerraums eingelagert wird als leichtes Stückgut. Falls es für das Logistikunternehmen vorteilhaft ist, bereits eine Vorsortierung bezüglich größerer und kleinerer Sendungen vorzunehmen, ist es auch möglich, kleineren Gegenständen einen anderen Lagerort im Lagerraum zuzuweisen als größerem Stückgut.

Insbesondere ist es vorteilhaft, bei der Einlagerung eines Stückguts die bekannten Merkmale des bereits eingelagerten Stückguts zu berücksichtigen. Ist es bspw. bekannt, dass an einer bestimmten Stelle bereits mehrere große Sendungen eingelagert wurden, so kann die nächste große Sendung - obwohl für große Sendungen eigentlich ein bestimmter Lagerort vorgesehen ist - in einem anderen Bereich des Lagerraums eingelagert werden. Sollte es dann für eine effiziente Füllung des Lagerraums vorteilhaft sein, weitere kleine Sendungen auf den bereits eingelagerten großen Sendungen zu positionieren, so kann auch dies unter Abweichung von der üblichen Regel durchgeführt werden.

In einer weiteren Ausgestaltung der Erfindung weist die Vorrichtung eine Detektionseinrichtung zur Bestimmung einer Lagerung des Stückguts im Lagerraum auf, und die Steuereinrichtung ist dafür ausgebildet, eine so gewonnene Information für die Verlagerung der Transportfläche zu berücksichtigen.

Bei dieser Ausgestaltung lässt sich eine nochmalige Verbesserung der Effizienz bei der Einlagerung von Stückgut erzielen. In einer sehr einfachen Realisierung wird in dem Lagerraum die Füllhöhe bestimmt, die durch das eingelagerte Stückgut hervorgerufen wird. Wird ein neues Stückgut in den Lagerraum eingelagert und erhöht sich dadurch die Füllhöhe, so erlaubt dies den Rückschluss, dass das zuletzt eingelagerte Stückgut nun den höchsten Punkt im Lagerraum darstellt. Dies wiederum ermöglicht den Rückschluss, dass das nächste Stückgut nicht an der nunmehr höchsten Stelle im Lagerraum eingelagert werden sollte, sondern an einer anderen Stelle. Bei einer verbesserten Ausgestaltung erfasst die Detektionsvorrichtung die Füllhöhe im Lagerraum an mehreren Stellen oder ermittelt anhand der höchsten Punkte des eingelagerten Stückguts eine gedachte Oberfläche, auf der das nächste Stückgut in etwa zu liegen käme. Es ist dann möglich die niedrigste Füllhöhe im Lagerraum bzw. den niedrigsten Abschnitt der gedachten Oberfläche zu ermitteln und daraus eine vorteilhafte Positionierung des Abladebereichs für das nächste Stückgut zu bestimmen.

In einer weiteren Ausgestaltung der Erfindung ist die Transportfläche zumindest abschnittsweise in der Art einer Rutsche ausgebildet, so dass sich das Stückgut durch Einwirkung der Schwerkraft an die verschiedenen Stellen bewegt.

Diese Ausgestaltung bietet eine besonders kostengünstige Möglichkeit, die Bewegung des Stückguts entlang der Transporteinrichtung zu realisieren. Um das Stückgut auf der Transporteinrichtung zu bewegen, ist die Transporteinrichtung um einen bestimmten Winkel geneigt, so dass sich das Stückgut in Richtung des Abladebereichs bewegt und von dort in den Lagerraum abgelegt wird.

Dabei ist es insbesondere vorteilhaft, wenn eine Neigung der Transportfläche variabel einstellbar ist.

Durch die Neigung um eine horizontale Achse kann gezielt beeinflusst werden, ob sich das Stückgut auf der Transporteinrichtung bewegt (und wie schnell es sich bewert) oder ob es auf der Transporteinrichtung ruht.

Soll bspw. die Transporteinrichtung zunächst verschwenkt werden, bevor sich das Stückgut entlang der Transporteinrichtung bewegt, so kann die Transporteinrichtung zunächst im Wesentlichen waagerecht gestellt werden, das Verschwenken der Transporteinrichtung durchgeführt werden und schließlich die Transporteinrichtung geneigt werden, um das Stückgut zum Abladebereich zu bewegen. Soll eine besonders leichte Bewegung des Stückguts auf der Transporteinrichtung möglich sein, so können auf der Transporteinrichtung Rollen oder dergleichen vorgesehen werden.

Dabei ist es bevorzugt, wenn die Öffnung eine untere Begrenzung besitzt, die im oberen Viertel einer Wandhöhe des Lagerraums angeordnet ist.

Auf diese Weise kann die Wirkung der Schwerkraft auch dann noch genutzt werden, wenn der Lagerraum bereits erheblich gefüllt ist.

In einer weiteren Ausgestaltung der Erfindung weist die Transporteinrichtung zumindest abschnittsweise antreibbare Förderelemente auf, die insbesondere als Förderbänder und/oder Rollen ausgebildet sind, so dass Stückgut auf der Transporteinrichtung durch zusätzliche Krafteinwirkung transportiert werden kann.

Auf diese Weise erhält man zusätzliche Möglichkeiten, ein Stückgut auf der Transporteinrichtung zu beeinflussen. Zum einen besteht die Möglichkeit, dass der Abladebereich oberhalb (bezogen auf das Schwerkraftfeld der Erde) der Öffnung liegt. Dadurch kann der Lagerraum besonders gut gefüllt werden. Andererseits bieten die antreibbaren Förderelemente die Möglichkeit, ein Stückgut auf der Transporteinrichtung abzubremsen, falls es aufgrund einer starken Neigung der Transporteinrichtung zu viel Geschwindigkeit aufnimmt. Eine solche Situation könnte insbesondere dann eintreten, wenn der Lagerraum nur wenig gefüllt ist, da dann der Abladebereich relativ niedrig positioniert werden muss, um einen Sturz des Stückguts aus großer Höhe zu verhindern. Soll der Abladebereich aber niedrig positioniert werden, so ist dafür in der Regel eine größere Neigung der Transporteinrichtung erforderlich, was zu einer erheblichen Beschleunigung des Stückguts führen könnte. Daher sind die antreibbaren Förderelemente vorteilhafterweise dazu ausgebildet, das Stückgut abzubremsen und so seine Geschwindigkeit niedrig zu halten.

In einer weiteren Ausgestaltung der Erfindung weist die Transportfläche mindestens zwei Segmente auf, die relativ zueinander beweglich sind, wobei ein erstes Segment zum Ablegen des Stückguts an der Öffnung angeordnet ist und wobei ein zweites Segment dafür ausgebildet ist, das Stückgut vom ersten Segment zu übernehmen.

Hierdurch ergeben sich weitere Möglichkeiten, ein Stückgut möglichst genau an einer gewünschten Stelle im Lagerraum einzulagern. Soll ein einzulagerndes Stückgut in der Nähe der Öffnung eingelagert werden, wird das zweite Segment eingefahren, so dass lediglich das erste Segment die gewünschten Stelle im Lagerraum bestimmt. Soll ein Stückgut hingegen in einer möglichst großen Entfernung von der Öffnung abgeladen werden, so wird das zweite Segment möglichst weit ausgefahren. Der Abstand zwischen der Öffnung und der gewünschten Stelle im Lagerraum kann also variiert werden.

Das Stückgut wird zunächst entlang des ersten Segments transportiert, gelangt dann auf das zweite Segment und wird vom zweiten Segment an die gewünschten Stelle im Lagerraum abgeladen. Berücksichtigt man neben dieser Möglichkeit, den Abstand zwischen der Öffnung und dem Abladebereich zu variieren, auch die zuvor erläuterten Möglichkeiten die Transporteinrichtung zu neigen und zu verschwenken, so kann ein einzulagerndes Stückgut sehr genau an vielen verschiedenen Stellen des Lagerraums abgelegt werden.

In einer weiteren Ausgestaltung der Erfindung sind die mindestens zwei Segmente teleskopartig zusammenschiebbar.

Dies ermöglicht eine sehr einfache, zuverlässige und kostengünstige Realisierung einer ausfahrbaren Transporteinrichtung.

In einer weiteren Ausgestaltung der Erfindung weist der Lagerraum mindestens zwei getrennte Bereiche auf, in die Stückgut mit unterschiedlichen Merkmalen einsortiert werden kann.

Eine solche Vorsortierung kann eine Effizienzsteigerung und einen Zeitgewinn bewirken. Werden bspw. in einen Bereich die Expresssendungen und in einen anderen Bereich normale Sendungen eingelagert, so besteht für den Logistikunternehmer die Möglichkeit schnell festzustellen, welche Arten von Sendungen eingelagert wurden. Wird bspw. einem Kunden mit einer Expresssendung eine Abholung innerhalb von 12 Stunden zugesagt, während für eine normale Sendung eine Abholung innerhalb von 2 Tagen zugesagt wird, so kann ein Fahrer des Logistikunternehmens innerhalb kürzester Zeit eine Vielzahl solcher Vorrichtungen (oder Packstationen) anfahren und schnell feststellen, ob hier eilige Sendungen abzuholen sind. Es ist nicht erforderlich, alle eingelagerten Sendungen zu sichten.

In einer weiteren Ausgestaltung der Erfindung ist die Entnahmeeinrichtung als verschließbare Entnahmeöffnung in der Umhäusung ausgeführt.

Diese Ausgestaltung bietet eine kostengünstige Möglichkeit, um das Entnehmen von eingelagertem Stückgut aus dem Lagerraum zu ermöglichen. Die Entnahmeöffnung ist dabei insbesondere als Klappe oder Tür ausgeführt.

In einer weiteren Ausgestaltung der Erfindung weist die Entnahmeeinrichtung ein Behältnis auf, das dafür ausgebildet ist, mit darin befindlichem Stückgut aus dem Lagerraum entnommen zu werden.

Diese Ausgestaltung stellt eine weitere Vereinfachung der Entnahme von Stückgut (insbesondere bei einer erheblichen Anzahl) aus dem Lagerraum dar. Das Behältnis ist dabei insbesondere nach Öffnen einer Klappe an der Umhäusung des Lagerraums zugängig, oder aber eine Wand des Behältnisses schließt mit der Umhäusung des Lagerraums ab. Das Behältnis kann mit dem Stückgut aus dem Lagerraum entnommen werden. Das Stückgut kann dann entweder in ein Transportfahrzeug umgeladen und das Behältnis zurück in den Lagerraum gestellt werden. Es ist aber auch möglich, dass das Transportfahrzeug ein leeres Behältnis mit sich führt, so dass das gefüllte Behältnis mit dem Stückgut in das Transportfahrzeug gestellt wird und das leere Behältnis in dem Lagerraum installiert wird.

In einer weiteren Ausgestaltung der Erfindung ist die Entnahmeeinrichtung als ein Containerelement ausgebildet, wobei das Containerelement dafür ausgebildet ist, mit darin befindlichem Stückgut von der Vorrichtung abgekoppelt zu werden.

Diese Ausgestaltung bietet eine besonders gute Handhabung von einer großen Anzahl an Stückgut und/oder von Stückgut mit großem Gewicht. Dabei ist bevorzugt, dass das Containerelement von einem Transportfahrzeug aufgenommen wird und durch ein leeres Containerelement ersetzt wird. Das Auswechseln des Containerelements kann dabei weitestgehend oder sogar vollständig mittels Maschinenkraft bewirkt werden, so dass obwohl eine große Menge an Stückgut (bzw. ein großes Gewicht) bewegt wird, eine sehr einfache Handhabung gewährleistet ist.

In einer weiteren Ausgestaltung der Erfindung ist die Vorrichtung betriebsmäßig mit einer Packstation zum automatisierten Ein- und Auslagern von Stückgut verbunden.

Es versteht sich, dass die vorstehend und nachstehend noch zu erläuternden Merkmale nicht nur in der jeweils angegebenen Kombination, sondern auch in anderen Kombination oder in Alleinstellung verwendbar sind, ohne den Rahmen der vorliegenden Erfindung zu verlassen.

Ausführungsbeispiele der Erfindung sind in der Zeichnung näher dargestellt und werden in der nachfolgenden Beschreibung näher erläutert. Es zeigen:
- Fig. 1: eine perspektivische Ansicht der erfindungsgemäßen Vorrichtung, die mit einer Paketstation verbunden ist;
- Fig. 2: eine perspektivische Ansicht der Vorrichtung gemäß Fig. 1, wobei die Wände transparent dargestellt sind;
- Fig. 3a: eine Ansicht der Vorrichtung gemäß Fig. 1 von oben, wobei ein erster Schritt beim Einlagern eines ersten Gegenstands gezeigt ist;
- Fig. 3b: eine Ansicht der Vorrichtung gemäß Fig. 1 von oben, wobei ein zweiter Schritt beim Einlagern eines ersten Gegenstands gezeigt ist;
- Fig. 3c: eine Ansicht der Vorrichtung gemäß Fig. 1 von oben, wobei ein dritter Schritt beim Einlagern eines ersten Gegenstands gezeigt ist;
- Fig. 4a: eine Ansicht der Vorrichtung gemäß Fig. 1 von oben, wobei ein erster Schritt beim Einlagern eines zweiten Gegenstands gezeigt ist;
- Fig.4b: eine Ansicht der Vorrichtung gemäß Fig. 1 von oben, wobei ein zweiter Schritt beim Einlagern eines zweiten Gegenstands gezeigt ist;
- Fig. 5a: eine Ansicht der Vorrichtung gemäß Fig. 1 von oben, wobei ein erster Schritt beim Einlagern eines dritten Gegenstands gezeigt ist;
- Fig.5b: eine Ansicht der Vorrichtung gemäß Fig. 1 von oben, wobei ein zweiter Schritt beim Einlagern eines dritten Gegenstands gezeigt ist;
- Fig. 6a: eine Ansicht der Vorrichtung gemäß Fig. 1 von oben, wobei ein erster Schritt beim Einlagern eines vierten Gegenstands gezeigt ist;
- Fig. 6b: eine Ansicht der Vorrichtung gemäß Fig. 1 von oben, wobei ein zweiter Schritt beim Einlagern eines vierten Gegenstands gezeigt ist;
- Fig. 7a: eine teleskopartige Transporteinrichtung im eingefahrenen Zustand;
- Fig. 7b: die teleskopartige Transporteinrichtung gemäß Fig. 7a im ausgefahrenen Zustand; und
- Fig. 8: eine Transporteinrichtung mit antreibbaren Förderelementen.

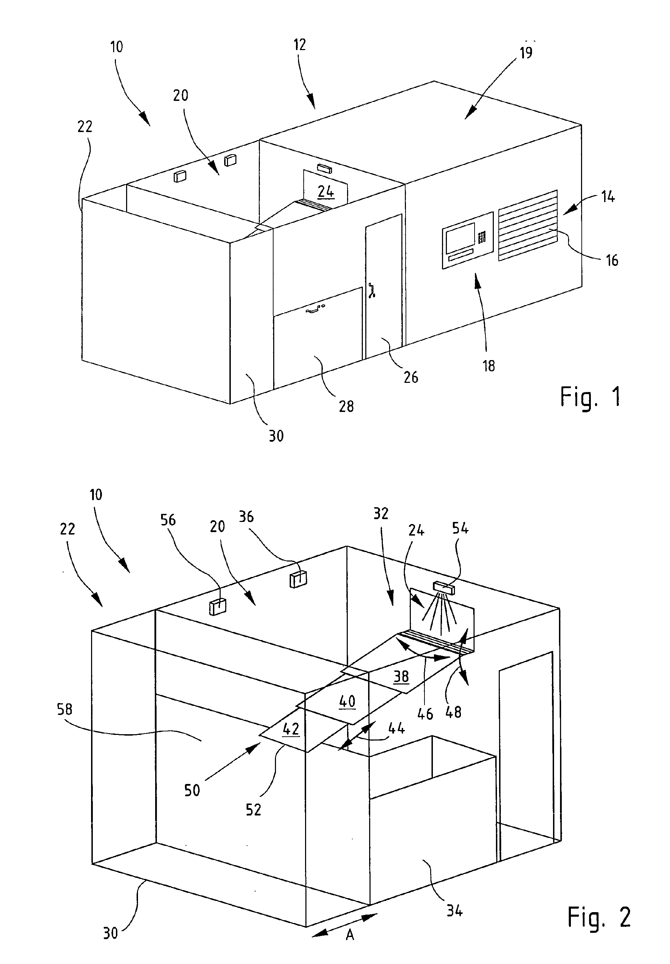

Fig. 1 zeigt eine Vorrichtung 10 zum automatisierten Einlagern von Stückgut, die hier in Verbindung mit einer Paketstation 12 gezeigt ist.

Die Paketstation 12 weist eine Schleuse 14 auf, die mit einem Rollladen 16 verschlossen werden kann und die im geöffneten Zustand dem Einbringen von Stückgut in die Paketstation 12 bzw. der Entnahme von Stückgut aus der Paketstation 12 dient. Für die Interaktion mit einem Benutzer ist die Paketstation 12 mit einem Bedienerterminal 18 ausgerüstet. Mittels der Paketstation 12 wird Stückgut, welches durch ein Logistikunternehmen in einem Aufbewahrungsraum 19 der Paketstation 12 eingelagert wurde, an einen berechtigten Benutzer bzw. den Empfänger des Stückguts herausgegeben.

Die Vorrichtung 10 weist einen geschlossenen Lagerraum 20 auf, der zum Einlagern von Stückgut ausgebildet ist. Der Lagerraum 20 ist von einer Umhäusung 22 umschlossen. (Die Decke des Lagerraums 20 ist für eine bessere Übersichtlichkeit hier transparent dargestellt). Damit stellen der Aufbewahrungsraum 19 und der Lagerraum 20 bei dieser Ausführungsform zwei getrennte Räume für abzuholendes Stückgut (Aufbewahrungsraum 19) und für zu versendendes Stückgut (Lagerraum 20) dar.

Die Umhäusung 22 weist eine Öffnung 24 zum Einbringen von Stückgut in den Lagerraum 20 auf. Bei der hier gezeigten Vorrichtung 10 weist der Lagerraum drei von der Öffnung verschiedene Entnahmeeinrichtungen 26, 28, 30 zum Entnehmen von Stückgut aus dem Lagerraum 20 auf. Die Entnahmeeinrichtung 26 ist hier als Tür ausgebildet, die Entnahmeeinrichtung 28 als Klappe mit einem dahinterliegenden Behältnis (nicht gezeigt) ausgebildet und die Entnahmeeinrichtung 30 als Containerelement ausgebildet, das als Ganzes mit darin befindlichem Stückgut von der Vorrichtung 10 abgekoppelt werden kann. Mittels der Vorrichtung 10 wird Stückgut, das durch die Öffnung 24 in die Vorrichtung 10 geführt wird, in dem Lagerraum 20 eingelagert, insbesondere an einer gewünschten Stelle im Lagerraum 20 eingelagert. Vorteilhafterweise sind die freien Flächen der Umhäusung 22 als Schaufenster/Displays für Werbung ausgebildet.

Fig. 2 zeigt die Vorrichtung 10 gemäß der Fig. 1, wobei aber die Umhäusung 22 ganz transparent dargestellt ist. Bei dieser Darstellung sind eine Transporteinrichtung 32, das hinter der Entnahmeeinrichtung 28 befindliche Behältnis 34 sowie der Innenraum der Entnahmeeinrichtung 30 gut zu erkennen.

Die Transporteinrichtung 32 ist an der Öffnung 24 angeordnet und wird von einer Steuereinrichtung 36 gesteuert. Die Transporteinrichtung 32 weist ein erstes Segment 38, ein zweites Segment 40 und ein drittes Segment 42 auf, die teleskopartig ineinander geschoben werden können (Doppelpfeil 44).

Bei der gezeigten Transporteinrichtung 32 besteht ferner die Möglichkeit, die Transporteinrichtung 32 um eine vertikale Achse zu verschwenken (Doppelpfeil 46) und um eine horizontale Achse zu neigen (Doppelpfeil 48). Es sei darauf hingewiesen, dass die hier gezeigten Verstellmöglichkeiten der Transporteinrichtung 32 vorteilhaft sind, dass aber für eine Ausführung der vorliegenden Erfindung auch eine der Verstellmöglichkeiten ausreicht. In einer weiteren Ausführungsform sind die Segmente 38, 40, 42 so ausgebildet, dass sie gegeneinander verschwenkt werden können. Außerdem ist es vorteilhaft die Transporteinrichtung 32 bzw. eines oder mehrere der Segmente 38, 40, 42 so auszubilden, dass sie quer zur Transportrichtung gekippt werden können.

Die Verstellmöglichkeiten erlauben es, die von der Öffnung 24 am weitesten entfernte Kante 52 der Transportfläche 50 bzw. des dritten Segments 42 an unterschiedlichen Positionen innerhalb des Lagerraums 20 zu positionieren, um Stückgut an verschiedenen Stellen innerhalb des Lagerraums 20 abzulegen. Diese Funktion wird im Hinblick auf die weitere Figurenbeschreibung noch genauer erläutert werden.

An der Öffnung 24 ist eine Erfassungseinrichtung 54 zum Erfassen mindestens eines Merkmals eines eingebrachten Stückguts angeordnet, und die Steuereinrichtung 36 ist für eine Verlagerung der Transporteinrichtung 32 bzw. des Abladebereichs 50 in Abhängigkeit von diesem Merkmal ausgebildet. Als Merkmal werden dabei solche Informationen verstanden, die bei einer Entscheidung berücksichtigt werden sollen, wo ein bestimmtes Stückgut im Lagerraum 20 eingelagert werden soll.

Als ein geeignetes Merkmal werden insbesondere Volumen und/oder Gewicht des Stückguts angesehen, da sich so eine Unterscheidung zwischen großen und kleinen Stückgütern bzw. leichten und schweren Stückgütern treffen lässt. Vorteilhafterweise werden mehrere Merkmale erfasst und mittels logischer Verknüpfungen verknüpft. Außerdem kann die Erfassungseinrichtung 54 auch weitere Sensoren aufweisen, bspw. links und/oder rechts von der Öffnung 24, um zusätzliche Informationen zu erfassen oder um Informationen mit höherer Genauigkeit zu erfassen. Schließlich sei darauf hingewiesen, dass auf eine Erfassungseinrichtung 54 an der Öffnung 24 insbesondere dann verzichtet werden kann, wenn eine Merkmalserfassung bereits in der Schleuse 14 stattgefunden hat oder vom Benutzer am Bedienerterminal 18 eingegeben wurde.

Die Vorrichtung 10 weist ferner eine Detektionseinrichtung 56 auf, die eine Lagerung des Stückguts im Lagerraum 20 bestimmt und eine so gewonnene Information der Steuereinrichtung 36 zur Verfügung stellt. Die Steuereinrichtung 36 kann dann den aktuellen Lagerzustand im Lagerraum 20 bei der Verlagerung des Abladebereichs 50 berücksichtigen. Wenn die Detektionseinrichtung 56 dafür ausgebildet ist, eine Stelle mit der größten Füllhöhe zu ermitteln, kann die Steuereinrichtung 36 dies berücksichtigen und wird eine Ablage von Stückgut an dem höchsten Punkt vermeiden. Wenn die Detektionseinrichtung 56 dafür ausgebildet ist, mehrere Füllhöhen zu erfassen, insbesondere einen Bereich mit geringer Füllhöhe zu erkennen, so kann die Steuereinrichtung 36 dies berücksichtigen und bei Bedarf gezielt Stückgut an der Stelle mit der niedrigsten Füllhöhe platzieren.

Die Detektionseinrichtung 56 kann außerdem dafür ausgebildet sein, sicherheitstechnische Aspekte zu überwachen und bspw. ein Einbringen von weiterem Stückgut zu sperren, solange bspw. die Entnahmeeinrichtung 26 geöffnet ist oder das Behältnis 34 nicht eingesetzt ist. Außerdem ist es bspw. möglich, das Einbringen weiteren Stückguts in den Lagerraum 20 zu sperren, wenn die Detektionseinrichtung 56 einen maximalen Füllstand erkannt hat.

Die Transporteinrichtung 32 ist hier in der Art einer Rutsche ausgebildet, so dass sich Stückgut auf der Transporteinrichtung 32 durch Einwirkung der Schwerkraft in Richtung Kante 52 bewegt.

Die Entnahmeeinrichtung 30 besitzt eine Tiefe A und kann von der Vorrichtung 10 als Ganzes abgekoppelt werden. Dies ermöglicht es auf einfache Weise, Stückgut in der Entnahmeeinrichtung 30 zu sammeln und mit einem Transportfahrzeug abzuholen. Damit Stückgut weder unbeabsichtigt aus der Entnahmeeinrichtung 30 in den restlichen Lagerraum 20 gelangt noch umgekehrt, ist eine doppelte Zwischenwand 58 vorgesehen, von der ein Wandelement der Entnahmeeinrichtung 30 zugeordnet ist und der andere Teil dem restlichen Lagerraum 20. (Unterteilungen des Lagerraums 20 können auch durch Trennnetze realisiert werden.)

Soll die Entnahmeeinrichtung 30 geleert werden, besteht einerseits die Möglichkeit, die Entnahmeeinrichtung 30 abzukoppeln und in ein Transportfahrzeug auszuleeren. Andererseits ist es auch möglich, dass das Transportfahrzeug eine leere Entnahmeeinrichtung 30 mitführt und die gefüllte Entnahmeeinrichtung 30 gegen eine leere Entnahmeeinrichtung zu tauschen. Dadurch erzielt man insbesondere bei einem mittleren bis hohen Aufkommen an Stückgut eine effiziente Abholung und eine schnelle logistische Weiterverarbeitung des Stückguts.

Eine weitere Möglichkeit, Stückgut zu sortieren, bietet das Behältnis 34. Die Kante 52 der Transporteinrichtung 32 kann so verlagert werden, dass durch die Öffnung 24 eingebrachtes Stückgut in das Behältnis 34 geführt wird. Bei der gezeigten Vorrichtung 10 erfolgt die Leerung des Behältnisses 34 durch ein Öffnen der Klappe 28, und ein Entnehmen des Behältnisses 34. Das Behältnis 34 kann dann in ein Transportfahrzeug ausgeleert werden oder gegen ein leeres Behältnis 34 ausgetauscht werden. Es ist auch möglich, dass das Behältnis 34 in der Vorrichtung 10 verbleibt und lediglich für eine Entnahme herausgekippt wird.

Die Entnahmeeinrichtung 28 mit dem Behältnis 34 findet bspw. dort Anwendung, wo Expresssendungen von normalen Sendungen getrennt werden. Werden die Expresssendungen in das Behältnis 34 einsortiert, so können Expresssendungen gezielt aus dem Lagerraum 20 entnommen werden, ohne die Gesamtheit aller Sendungen sichten zu müssen.

Schließlich sei noch auf die als Tür ausgeführte Entnahmeeinrichtung 26 hingewiesen. Hier besteht die Möglichkeit, bspw. für den Fahrer eines Logistikunternehmens, den Lagerraum 20 zu betreten und darin befindliches Stückgut einzusammeln. Wie nachfolgend noch erläutert wird, ist es grundsätzlich auch möglich, in den einzelnen Abschnitten des Lagerraums 20 (also Entnahmeeinrichtung 30, Behältnis 34 und restlicher Lagerraum 20) eine Vorsortierung vorzunehmen.

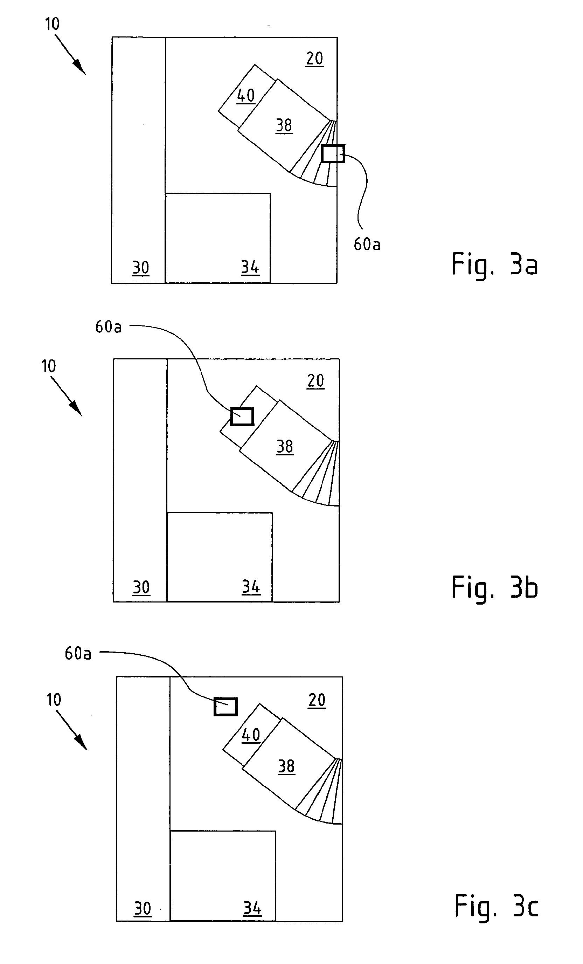

Figuren 3a bis 3c zeigen den Ablauf bei der Einlagerung eines kleinen Stückguts 60a. Die Vorrichtung 10 ist hier vereinfacht in der Draufsicht gezeigt. In Fig. 3a ist die Situation dargestellt, nachdem die Erfassungseinrichtung 54 das Stückgut 60a als "klein" erkannt hatte und die Transporteinrichtung 32 entsprechend verlagert wurde. Es sei angenommen, dass kleine Stückgüter in den oberen Bereich (bezogen auf die Orientierung der Zeichnung) des Lagerraums 20 eingelagert werden sollen.

Der Schwerkraft folgend, bei Bedarf auch durch einen Antrieb unterstützt, bewegt sich das Stückgut 60a über das erste Segment 38 und das zweite Segment 40, das teilweise eingefahren ist, zum Abladebereich 50 (siehe Fig.3b). An dieser Stelle rutscht das Stückgut 60a von der Kante 52 der Transportfläche 50 an seine Lagerstelle im Lagerraum 20. Durch die Einstellung der Transporteinrichtung 32, insbesondere hinsichtlich des Neigungswinkels, kann sichergestellt werden, dass eine maximal zulässige Fallhöhe nicht überschritten wird. Die Situation des abgelegten Stückguts 60a ist in der Fig. 3c zu sehen.

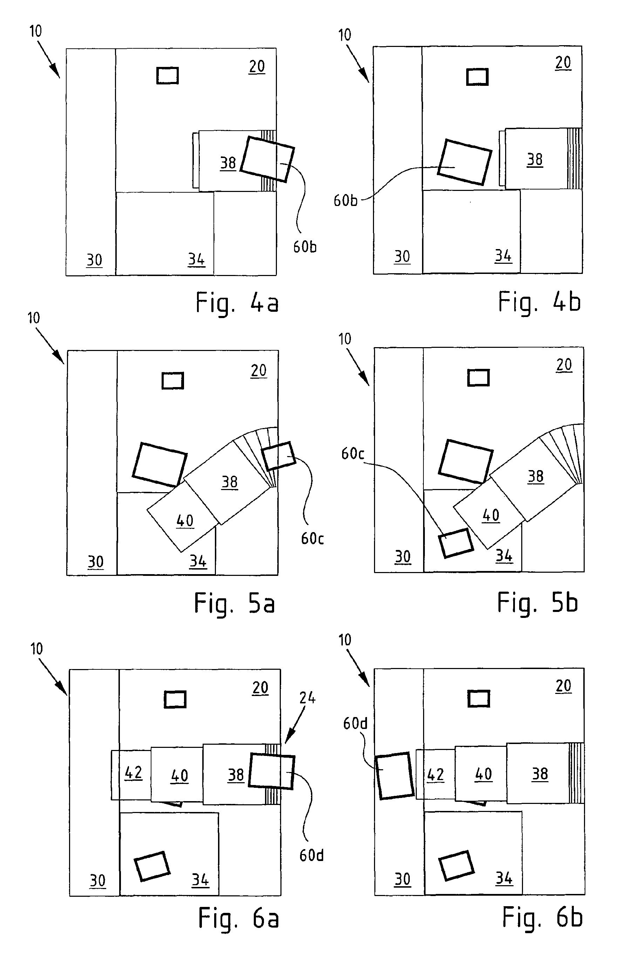

Figuren 4a und 4b zeigen die Situation beim Einbringen eines großen Stückguts 60b. Die Vorrichtung 10 ist wiederum vereinfacht in der Draufsicht gezeigt. In der Fig. 4a ist gezeigt, dass das Stückgut 60b der Kategorie "groß" zugeordnet und die Transporteinrichtung 32 entsprechend verlagert wurde. Im hier gezeigten Fall ist das zweite Segment fast vollständig eingefahren. Wie bereits im Hinblick auf die Fig. 3b erläutert, gelangt das Stückgut 60b über die Kante 52 an seine Lagerstelle im Lagerraum 20. Es sei dabei angenommen, dass großes Stückgut in der Mitte des Lagerraums 20 abgelegt werden soll.

Figuren 5a und 5b zeigen die Situation, wenn eine Expresssendung 60c in den Lagerraum 20 eingebracht wird. Es sei angenommen, dass Expresssendungen 60c in dem Behältnis 34 abgelegt werden sollen. Wie in der Fig. 5a gezeigt, hat sich die Transporteinrichtung 32 entsprechend verlagert, so dass die Expresssendung 60c entlang der Transporteinrichtung 32 in das Behältnis 34 gelangt (siehe Fig. 5b).

Schließlich zeigen Figuren 6a und 6b die Situation, wenn ein Stückgut in das Containerelement, also die Entnahmeeinrichtung 30, geführt wird. Dafür sind sowohl das zweite als auch das dritte Segment 40, 42 ausgefahren. Auf diese Weise rutscht das Stückgut 60d von der Öffnung 24 über die Transporteinrichtung 32 in die Entnahmeeinrichtung 30. Es sei darauf hingewiesen, dass auch innerhalb der Entnahmeeinrichtung 30 eine Vorsortierung vorgenommen werden kann, wenn die Transporteinrichtung 32 in Abhängigkeit von einem Merkmal des Stückguts 60d zusätzlich noch verschwenkt wird. Dann kann ein Stückgut im oberen, mittleren oder unteren Bereich (auf die Orientierung der Zeichnung bezogen) der Entnahmeinrichtung 30 eingelagert werden.

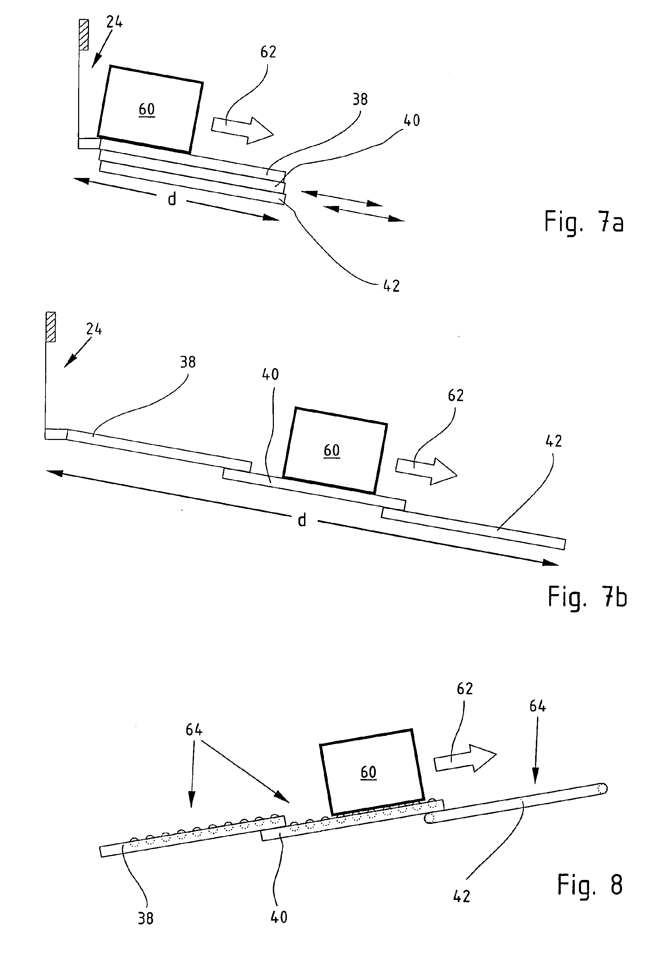

Figuren 7a und 7b zeigen die Transporteinrichtung 32 einmal mit eingefahrenen Segmenten 38, 40, 42 und einmal mit ausgefahrenen Segmenten 38, 40, 42. Es ist zu erkennen, dass sowohl das zweite Segment 40 als auch das dritte Segment 42 entlang einer durch die Transporteinrichtung 32 bestimmten Transportrichtung 62 verlagerbar sind. Durch das Ein- und Ausfahren der Segmente 40, 42 kann der Abstand d zwischen der Öffnung 24 und dem Abladebereich 50 in einem großen Bereich variiert werden.

Schließlich wird in der Fig. 8 noch die Möglichkeit gezeigt, die Transporteinrichtung 32 zumindest abschnittsweise mit antreibbaren Förderelementen 64 auszubilden. Bei dem hier gezeigten Beispiel sind die Förderelemente 64 des ersten und zweiten Segments 38, 40 als antreibbare Rollen ausgebildet, und das Förderelement 64 des dritten Segments 42 ist als ein Förderband ausgebildet. Auf diese Weise kann ein Stückgut 60 durch zusätzliche Krafteinwirkung auf der Transporteinrichtung 32 transportiert werden.

Dabei kann das Stückgut 60 sowohl in der Transportrichtung 62 beschleunigt werden als auch in der Transportrichtung 62 abgebremst werden. Eine Beschleunigung wird dann verwendet, wenn die Schwerkraft alleine nicht ausreicht, um das Stückgut 60 zu transportieren bzw. wenn das Stückgut 60 aufwärts, d.h. gegen die Schwerkraft, transportiert werden soll. Ein Abbremsen wird insbesondere dann unterstützend verwendet, wenn ein großer Neigungswinkel erforderlich ist, das Stückgut 60 aber nicht die Geschwindigkeit erreichen soll, die es bei einem freien Kräftespiel auf der Transporteinrichtung 32 erreichen würde.

Insgesamt ist eine vorteilhafte Vorrichtung 10 zum automatisierten Einlagern von Stückgut 60 gezeigt, die nicht auf eine feste Facheinteilung angewiesen ist, aber dennoch Möglichkeiten der Sortierung bietet. Durch die vielfältigen Möglichkeiten, die Ablage eines Stückguts 60 in dem Lagerraum 20 zu beeinflussen, kann eine sehr flexible und variable Nutzung des Lagerraums 20 erreicht werden. Wird die Transporteinrichtung 32 unmittelbar an der Öffnung 24 befestigt, so benötigt die Transporteinrichtung 32 keine weiteren Stütz- oder Trageelemente. Außerdem ist es möglich, unter Berücksichtigung der bereits eingelagerten Stückgüter eine bevorzugte Lagerstelle für das nächste Stückgut zu bestimmen. Dies kann entweder unter Rückgriff auf die Informationen zu bereits eingelagertem Stückgut erfolgen oder aber durch das Sammeln von Informationen mittels der Detektionseinrichtung 56. Schließlich bietet die Erfindung auch noch sehr flexible Möglichkeiten, eingelagertes Stückgut effizient abzuholen.

## Patentansprüche

1. Vorrichtung (10) zum automatisierten Lagern von Stückgut (60), insbesondere für eine Paketstation (12), mit einem Lagerraum (20), der zum Lagern eines Stückguts (60) ausgebildet ist, wobei der Lagerraum (20) von einer Umhäusung (22) umschlossen ist, die mindestens eine Öffnung (24) zum Einbringen des Stückguts (60) in den Lagerraum (20) aufweist, und wobei der Lagerraum (20) mindestens eine von der Öffnung (24) verschiedene Entnahmeeinrichtung (26; 28; 30) zum Entnehmen des Stückguts (60) aus dem Lagerraum (20) aufweist, **dadurch gekennzeichnet, dass** an der Öffnung (24) eine Transporteinrichtung (32) mit einer Transportfläche (50) angeordnet ist, die zum Ablegen eines durch die Öffnung (24) eingebrachten Stückguts (60) ausgebildet ist, dass die Vorrichtung (10) eine Steuereinrichtung (36) zur Verlagerung zumindest eines Teils der Transportfläche (50) aufweist und dass der Teil der Transportfläche (50) derart automatisiert verlagerbar ist, dass Stückgut (60) an unterschiedlichen Stellen im Lagerraum (20) abgeladen werden kann.

2. Vorrichtung nach Anspruch 1, **dadurch gekennzeichnet, dass** der Vorrichtung (10) eine Erfassungseinrichtung (54) zum Erfassen mindestens eines Merkmals eines eingebrachten Stückguts (60) zugeordnet ist und dass die Steuereinrichtung (36) für eine Verlagerung der Transportfläche (50) in Abhängigkeit von dem Merkmal ausgebildet ist.

3. Vorrichtung nach Anspruch 2, **dadurch gekennzeichnet, dass** das Merkmal das Volumen und/oder das Gewicht des Stückguts (60) ist.

4. Vorrichtung nach einem der vorhergehenden Ansprüche, **dadurch gekennzeichnet, dass** die Vorrichtung (10) eine Detektionseinrichtung (56) zur Bestimmung einer Lagerung des Stückguts (60) im Lagerraum (20) aufweist und dass die Steuereinrichtung (36) dafür ausgebildet ist, eine so gewonnene Information für die Verlagerung der Transportfläche (50) zu berücksichtigen.

5. Vorrichtung nach einem der vorhergehenden Ansprüche, **dadurch gekennzeichnet, dass** die Transportfläche (50) zumindest abschnittsweise in der Art einer Rutsche ausgebildet ist, so dass sich das Stückgut (60) durch Einwirkung der Schwerkraft an die unterschiedlichen Stellen bewegt.

6. Vorrichtung nach einem der vorhergehenden Ansprüche, **dadurch gekennzeichnet, dass** eine Neigung der Transportfläche (50) variabel einstellbar ist.

7. Vorrichtung nach einem der vorhergehenden Ansprüche, **dadurch gekennzeichnet, dass** die Öffnung (24) eine untere Begrenzung besitzt, die im oberen Viertel einer Wandhöhe des Lagerraums (20) angeordnet ist.

8. Vorrichtung nach einem der vorhergehenden Ansprüche, **dadurch gekennzeichnet, dass** die Transporteinrichtung (32) zumindest abschnittsweise antreibbare Förderelemente (64) aufweist, die insbesondere als Förderbänder und/oder Rollen ausgebildet sind, so dass Stückgut (60) auf der Transporteinrichtung (32) durch zusätzliche Krafteinwirkung transportiert werden kann.

9. Vorrichtung nach einem der vorhergehenden Ansprüche, **dadurch gekennzeichnet, dass** die Transportfläche (50) mindestens zwei Segmente (38, 40) aufweist, die relativ zueinander beweglich sind, wobei ein erstes Segment (38) zum Ablegen des Stückguts (60) an der Öffnung (24) angeordnet ist und wobei ein zweites Segment (40) dafür ausgebildet ist, das Stückgut (60) vom ersten Segment (38) zu übernehmen.

10. Vorrichtung nach Anspruch 9, **dadurch gekennzeichnet, dass** die mindestens zwei Segmente (38,40) teleskopartig zusammenschiebbar sind.

11. Vorrichtung nach einem der vorhergehenden Ansprüche, **dadurch gekennzeichnet, dass** der Lagerraum (20) mindestens zwei getrennte Bereiche (30, 34) aufweist, in die Stückgut (60) mit unterschiedlichen Merkmalen einsortiert werden kann.

12. Vorrichtung nach einem der vorhergehenden Ansprüche, **dadurch gekennzeichnet, dass** die Entnahmeeinrichtung (26) als verschließbare Entnahmeöffnung in der Umhäusung (22) ausgeführt ist.

13. Vorrichtung nach einem der vorhergehenden Ansprüche, **dadurch gekennzeichnet, dass** die Entnahmeeinrichtung (28) ein Behältnis (34) aufweist, das dafür ausgebildet ist, mit darin befindlichem Stückgut (60) aus dem Lagerraum (20) entnommen zu werden.

14. Vorrichtung nach einem der vorhergehenden Ansprüche, **dadurch gekennzeichnet, dass** die Entnahmeeinrichtung (30) als Containerelement ausgebildet ist, wobei das Containerelement dafür ausgebildet ist, mit darin befindlichem Stückgut (60) von der Vorrichtung (10) abgekoppelt zu werden.

15. Paketstation (12) zum automatisierten Ein- und Auslagern von Stückgut (60), mit einer Vorrichtung (10) nach einem der vorhergehenden Ansprüche.

16. Verfahren zum automatisierten Einlagern von Stückgut (60) in einen von einer Umhäusung (22) umschlossenen Lagerraum (20), mit den folgenden Schritten:
- Bereitstellen einer Öffnung (24) in der Umhäusung (22) zum Einbringen von Stückgut (60) in den Lagerraum (20),
- Bereitstellen einer von der Öffnung (24) verschiedenen Entnahmeeinrichtung (26; 28; 30) zum Entnehmen von Stückgut (60) aus dem Lagerraum (20), **gekennzeichnet durch**
- Bereitstellen einer Transporteinrichtung (32) an der Öffnung (24), wobei die Transporteinrichtung (32) eine Transportfläche (50) aufweist,
- Ablegen des Stückguts (60) **durch** die Öffnung (24) auf der Transportfläche (50),
- automatisiertes Verlagern zumindest eines Teils der Transportfläche (50),
- Bewegen des Stückguts (60) über die Transportfläche (50), und
- Abladen in den Lagerraum (20),
wobei das Verlagern mittels einer Steuereinrichtung (36) derart gesteuert wird, dass Stückgut (60) an unterschiedlichen Stellen im Lagerraum (20) abgeladen werden kann.
